# EUROPÄISCHE PATENTSCHRIFT

(11) **EP 1 773 647 B1**
(45) Veröffentlichungstag und Bekanntmachung des Hinweises auf die Patenterteilung: **24.02.2010**
(21) Anmeldenummer: 05777869.8
(22) Anmeldetag: 01.08.2005
(51) Int. Cl.: B62D 15/02

(54) **VORRICHTUNG ZUM ERMITTELN EINES LENKRADWINKELS**
DEVICE FOR DETERMINING THE STEERING WHEEL ANGLE
DISPOSITIF PERMETTANT DE DETERMINER UN ANGLE VOLANT

(30) Priorität: 05.08.2004 DE 102004038308
(43) Veröffentlichungstag der Anmeldung: 18.04.2007
(73) Patentinhaber: Continental Teves AG & Co. oHG, 60488 Frankfurt am Main (DE)
(72) Erfinder: BÖHM, Jürgen, 65558 Oberneisen (DE); JUNGBECKER, Johann, 555761 Badenheim (DE); SCHIRLING, Andreas, 64319 Pfungstadt (DE); MUTH, Norman, 35066 Frankfurt am Main (DE)
(86) Internationale Anmeldenummer: PCT/EP2005/053748
(87) Internationale Veröffentlichungsnummer: WO 2006/032568

(56) Entgegenhaltungen:
- EP-A- 0 381 963
- EP-A- 1 422 125
- US-A- 5 491 632

## Beschreibung

Die Erfindung betrifft eine Vorrichtung zum Ermitteln eines Lenkradwinkels umfassend einen, in einem wenigstens einer vollständigen Umdrehung des Lenkrades entsprechenden Winkelbereich absolut messenden Winkelgeber mit einer ersten Genauigkeit, einen inkremental messenden Winkelgeber, der ein erstes Ausgangssignal liefert, aus dem eine Veränderung der Winkelstellung des Lenkrades mit einer zweiten Genauigkeit ermittelbar ist, die größer als die erste Genauigkeit ist, und der ein zweites Ausgangssignal liefert, wenn das Lenkrad wenigstens eine vorgegebene Stellung einnimmt, die wenigstens zwei Referenzlenkradwinkeln zuordenbar ist sowie eine mit den Winkelgebern verbundene Auswerteeinheit, wobei die Auswerteeinheit den Lenkradwinkel ausgehend von einem mittels des absolut messenden Winkelgebers bestimmten Ausgangswert nach Maßgabe des ersten Ausgangssignals des inkremental messenden Lenkradwinkelgebers ermittelt, und die Auswerteeinheit den Wert des Lenkradwinkels beim Auftreten des zweiten Ausgangssignals an einen der Referenzlenkradwinkel anpasst.

Es ist bekannt, Eingriffe in ein Lenkungssystem eines Kraftfahrzeugs mittels einer so genannten Überlagerungslenkung vorzunehmen. Dabei greift ein Stellmotor über ein Planetengetriebe in den Lenkstrang ein, wobei zusätzlich zu dem durch den Fahrer des Kraftfahrzeugs eingestellten Lenkwinkel ein weiterer Lenkwinkel eingestellt werden kann.

Der Lenkwinkel an den lenkbaren Rädern des Fahrzeugs ergibt sich bei dem mit einer Überlagerungslenkung ausgestatten Lenksystem somit aus der Summe des von dem Fahrer eingestellten Lenkwinkels und des mittels des Stellmotors eingestellten Zusatzlenkwinkels.

Der Zusatzlenkwinkel wird durch einen elektronischen Regler berechnet und ermöglicht eine Unterstützung des Fahrers. So kann beispielsweise ein Fahrdynamikregler eingesetzt werden, der einen Zusatzlenkwinkel ermittelt, mit dem in unkritischen Fahrsituationen die Agilität des Fahrzeugs und in kritischen Fahrsituationen die Fahrzeugstabilität verbessert werden kann.

Ferner ist es bekannt, den Lenkstrang mit einem elektronisch gesteuerten Lenkmoment zu beaufschlagen, wozu beispielsweise eine elektronische Servolenkung verwendet werden kann. Über das zusätzliche Lenkmoment kann dem Fahrer beispielsweise bei einem Über- oder Untersteuern des Fahrzeugs eine "Lenkempfehlung" gegeben werden, um ihn dabei zu unterstützen, das Fahrzeug zu stabilisieren.

Bei den Eingriffen in das Lenkungssystem ist es entscheidend, dass der Zusatzlenkwinkel bzw. das zusätzliche Lenkmoment sehr genau eingestellt wird, um den Fahrer wirkungsvoll zu unterstützen und um die Eingriffe insbesondere in unkritischen Fahrsituationen so vorzunehmen, dass sie für den Fahrer nicht unangenehm spürbar sind.

Voraussetzung hierfür ist es, dass der von dem Fahrer eingestellte Lenkradwinkel mit einer hohen Genauigkeit gemessen wird. Dabei besteht jedoch das Problem, dass derzeit aus der Großserienproduktion erhältliche absolut messende Lenkradwinkelsensoren, wie sie beispielsweise in herkömmlichen ESP-Systemen zum Ermitteln des Lenkwinkels eingesetzt werden, nicht die erforderliche Genauigkeit und Auflösung erreichen.

Es muss daher Sensoren mit einer hohen Genauigkeit zurückgegriffen werden, die jedoch sehr teuer sind und bislang nicht in einer Großserienproduktion hergestellt werden können.

Die EP 1 422 125 A1 offenbart eine Lenkwinkelkorrekturvorrichtung mittels der ein eine Referenzposition durch Korrigieren der Lenkwinkelinitiierungsposition um eine Betrag entsprechend eines Referenzfehlers aufweist. Der Referenzfehler wird durch eine vorangehende Steueraktion bestimmt und gespeichert.

Daher ist es eine Aufgabe der Erfindung, die Genauigkeit bei der Lenkradwinkelmessung möglichst einfach zu erhöhen und eine Lenkwinkelbestimmung anzugeben, bei der mehrere Referenzmarken für eine Lenkvorrichtung berücksichtigt werden.

Erfindungsgemäß wird diese Aufgabe durch eine Vorrichtung mit den Merkmalen des Patentanspruchs 1 gelöst.

Die Vorrichtung zum Ermitteln eines Lenkradwinkels umfasst einen, in einem wenigstens einer vollständigen Umdrehung des Lenkrades entsprechenden Winkelbereich absolut messenden Winkelgeber mit einer ersten Genauigkeit und einen inkremental messenden Winkelgeber. Dieser liefert ein erstes Ausgangssignal, aus dem eine Veränderung der Winkelstellung des Lenkrades mit einer zweiten Genauigkeit ermittelbar ist, die größer als die erste Genauigkeit ist, sowie ein zweites Ausgangssignal, wenn das Lenkrad eine vorgegebene Stellung einnimmt, die wenigstens zwei Referenzlenkradwinkeln zugeordnet ist. Die Vorrichtung umfasst ferner eine mit den Winkelgebern verbundene Auswerteeinheit, wobei die Auswerteeinheit den Lenkradwinkel ausgehend von einem mittels des absolut messenden Winkelgebers bestimmten Ausgangswert nach Maßgabe des ersten Ausgangssignals des inkremental messenden Lenkradwinkels ermittelt, und wobei die Auswerteeinheit den beim Auftreten des zweiten Ausgangssignals vorliegenden Wert des Lenkradwinkels anhand des zweiten Ausgangssignals anpasst.

Unter dem Lenkradwinkel des Lenkrades wird dabei entsprechend der üblichen Konvention ein Winkel verstanden, der in dem gesamten Winkelbereich, in dem das Lenkrad gedreht werden kann, eindeutig ist.

In der Regel sind dabei ausgehend von der Geradausstellung jeweils zwei Umdrehungen im Uhrzeigersinn und entgegen dem Uhrzeigersinn möglich, so dass der gesamte Winkelbereich 1440° umfasst.

Die Erfindung basiert auf der Idee, einen autonom messenden Winkelgeber mit geringer Genauigkeit, bei dem es sich beispielsweise um einen herkömmlichen Lenkradwinkelsensor eines ESP-Systems handeln kann, durch einen zusätzlichen, inkremental messenden Winkelgeber zu ergänzen, um die Genauigkeit und die Auflösung bei der Lenkradwinkelmessung zu erhöhen.

Inkremental messende Winkelgeber mit hoher Genauigkeit und Auflösung sind dabei sehr kostengünstig und in großen Stückzahlen erhältlich.

Der erfindungsgemäß eingesetzte inkremental messende Winkelgeber liefert dabei ein erstes Ausgangssignal, das eine Veränderung des Lenkradwinkels angibt. Ferner liefert er ein zweites Ausgangssignal, wenn sich das Lenkrad in einer vorgegebenen Stellung befindet.

Ließe sich das Lenkrad weniger als eine volle Umdrehung drehen, so wäre diese Stellung des Lenkrades eindeutig ein Referenzlenkradwinkel zugeordnet, der beim Auftreten des zweiten Signals als Ausgangswert für die Lenkradwinkelmessung zugrunde gelegt werden könnte. Ausgehend von diesem Ausgangswert könnte dann der Lenkradwinkel nach Maßgabe des ersten Ausgangssignals mittels des inkremental messenden Winkelgebers bestimmt werden, wie es in ähnlicher Weise beispielsweise in der deutschen Offenlegungsschrift DE 198 16 928 A1 beschrieben ist.

Da sich das Lenkrad tatsächlich jedoch wenigstens um eine volle Umdrehung verdrehen lässt, sind einer vorgegebenen Lenkradstellung mehrere Referenzlenkradwinkel zugeordnet, so dass das zweite Ausgangssignal nicht zur Ermittlung eines Ausgangswertes für die Lenkwinkelmessung herangezogen werden kann.

Erfindungsgemäß wird daher vorgeschlagen, dass der Ausgangswert für die inkrementale Messung des Lenkradwinkels mittels des absolut messenden Winkelgebers ermittelt wird, und dass der Wert des Lenkradwinkels, dessen Genauigkeit zunächst auf die Genauigkeit des absolut messenden Winkelgebers beschränkt ist, beim Auftreten des zweiten Ausgangssignals des inkremental messenden Winkelgebers korrigiert wird. Nachfolgend kann der Lenkradwinkel dann mit der hohen Genauigkeit des inkremental messenden Winkelgebers bestimmt werden.

In einer zweckmäßigen Ausführungsform der Erfindung ist es dabei vorgesehen, dass die Auswerteinheit beim Auftreten des zweiten Ausgangssignals des inkremental messenden Winkelgebers einen Wert des Lenkradwinkels festlegt, welcher dem Referenzlenkradwinkel entspricht, dessen Wert dem vorliegenden Wert des Lenkradwinkels am nächsten liegt.

Auf diese Weise wird anhand des vorliegenden Lenkradwinkels, der ausgehend von dem mittels des absolut messenden Winkelgebers ermittelten Ausgangswert bestimmt wird, aus den Referenzlenkradwinkeln, welche der vorgegebenen Lenkradposition zugeordnet sind, der vorliegende Referenzlenkradwinkel ausgewählt und zur Anpassung des Messwertes verwendet.

In einer weiteren zweckmäßigen Ausgestaltung der Erfindung ist es dabei vorgesehen, dass der angepasste Wert des Lenkradwinkels als neuer Ausgangswert dient, wobei der Lenkradwinkel nach der Anpassung ausgehend von dem neuen Ausgangswert nach Maßgabe des ersten Ausgangssignals des inkremental messenden Winkelgebers ermittelt wird.

In einer vorteilhaften Ausführungsform der Erfindung ist es vorgesehen, dass der Ausgangswert mittels des absolut messenden Winkelgebers bei einem Zündungsneustart bestimmt wird.

Zweckmäßigerweise wird dabei der Wert des Lenkradwinkels anhand des zweiten Ausgangssignals des inkremental messenden Winkelgebers angepasst, wenn das Lenkrad erstmals nach dem Zündungsneustart die vorgegebene Position einnimmt.

In einer vorteilhaften Ausgestaltung der Erfindung kann es auch vorgesehen sein, dass die Ermittlung des Ausgangswertes mittels des absolut messenden Winkelgebers und die Anpassung des Wertes des Lenkwinkels anhand des zweiten Ausgangssignals des inkremental messenden Winkelgebers im Wesentlichen gleichzeitig erfolgen.

Bei der vorgegebenen Stellung des Lenkrads handelt es sich vorzugsweise um die Geradeausstellung.

Diese wird üblicherweise bereits kurz nach einem Zündungsneustart durch den Fahrer eingestellt, so dass die Anpassung des Wertes des Lenkradwinkels mittels des zweiten Ausgangssignals des inkremental messenden Winkelgebers in der Regel bereits kurzzeitig nach einem Zündungsneustart erfolgen kann.

In einer weiteren Ausführungsform der Erfindung kann es auch vorgesehen sein, dass mehrere Positionen des Lenkrads vorgegeben werden, bei deren Vorliegen der inkremental messende Winkelgeber ein zweites Ausgangssignal liefert.

Hierdurch kann die Zeitdauer zwischen einem Zündungsneustart und dem Einstellen einer vorgegebenen Position des Lenkrads durch den Fahrer weiter verkürzt werden, so dass die Korrektur des Lenkradwinkels sehr kurzzeitig erfolgen kann.

Darüber hinaus hat diese Ausführungsform der Erfindung den Vorteil, dass auch dann eine frühzeitige Anpassung des Lenkradwinkels vorgenommen werden kann, wenn der Fahrer das Fahrzeug nach einem Zündungsneustart in eine Kurve steuert ohne das Lenkrad in die Geradeausstellung zu bringen.

In einer vorteilhaften Ausführungsform der Erfindung weist der inkremental messende Winkelgeber einen magnetoresistiven Sensor auf, der eine Inkrementalspur eines an einer mit dem Lenkrad verbundenen Lenkwelle befestigten Polrades abtastet, um das erste Ausgangssignal zu erzeugen.

In einer weiteren vorteilhaften Ausführungsform der Erfindung weist der inkremental messende Winkelgeber einen weiteren magnetoresistiven Sensor auf, der eine weitere Spur des Polrades mit wenigstens einem, in einem vorgegebenen Winkelsegment des Polrades angeordneten Polpaar abtastet, um das zweite Ausgangssignal zu erzeugen.

Vorteilhaft kann es dabei auch vorgesehen sein, dass die weitere Spur des Polrades in mehreren, zueinander beabstandeten Winkelsegmenten jeweils ein Polpaar aufweist.

Der absolut messende Winkelgeber ist in einer vorteilhaften Ausgestaltung der Erfindung Bestandteil eines ESP-Systems.

Besonders vorteilhaft kann der ermittelte hochgenaue Lenkradwinkel als Eingangsgröße für ein System dienen, welches einen Zusatzlenkwinkel an den lenkbaren Rädern eines Fahrzeugs einstellt.

Ebenso vorteilhaft kann der ermittelte Lenkwinkel als Eingangsgröße für ein System dienen, welches dem Lenkrad ein Lenkmoment aufprägt.

Weitere Vorteile, Besonderheiten und zweckmäßige Weiterbildungen der Erfindung ergeben sich aus der folgenden Darstellung bevorzugter Ausführungsbeispiele anhand der Figuren.

Von den Figuren zeigt
- Fig. 1: eine schematische Darstellung der Lenkanlage eines Fahrzeugs mit einem absolut messenden Winkelgeber und einem zusätzlichen inkremental messenden Winkelgeber und
- Fig. 2: eine Ausführungsform eines inkremental messenden Winkelgebers.

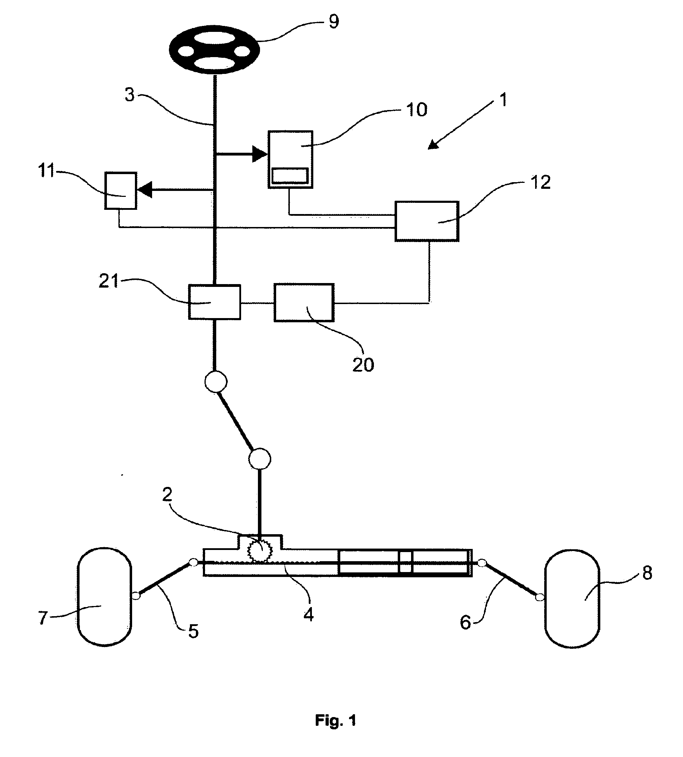

Die in der Figur 1 dargestellte Lenkanlage eines Fahrzeugs ist als Ganzes mit der Bezugsziffer 1 versehen. In der beispielhaft dargestellten Ausgestaltung ist die Lenkanlage 1 als Zahnstangenlenkung ausgebildet, bei der ein Ritzel 2, das an der Lenkwelle 3 angebracht ist, in eine Zahnstange 4 eingreift, die seitlich an der Zahnstange 4 befestigte Spurstangen 5,6 betätigt, und dadurch ein Verschwenken der Räder 7,8 bewirken kann. Im Rahmen der Erfindung können jedoch selbstverständlich auch andere dem Fachmann bekannte Lenkanlagen eingesetzt werden.

Das von dem Fahrer betätigte Lenkrad 9 ist direkt oder über eine weitere Welle mit der Lenkwelle 3 verbunden, wobei die Winkelstellung der Lenkwelle 3 der Winkelstellung des Lenkrads 9 entspricht. Per üblicher Konvention entspricht dabei die Geradeausstellung des Lenkrades 9 bzw. der Lenkwelle 3, d.h. die Stellung, in der die Räder parallel zur Fahrzeuglängsachse ausgerichtet sind, einem Lenkradwinkel von 0°. Bei einer Drehung des Lenkrades im Uhrzeigersinn vergrößert sich der Lenkradwinkel und bei einer Drehung entgegen dem Uhrzeigersinn verringert er sich.

Üblicherweise ist das Lenkrad 9 bzw. die Lenkwelle 3 in einem Winkelbereich von -720° bis +720° drehbar, d.h. das Lenkrad 9 lässt sich ausgehend von der Geradeausstellung um zwei volle Umdrehungen im Uhrzeigersinn und um zwei volle Umdrehungen entgegen dem Uhrzeigersinn drehen.

An der Lenkwelle 3 ist ein erster Winkelgeber 10 angebracht, mit dem die Winkelstellung der Lenkwelle 3 bzw. des Lenkrades 9 absolut messbar ist.

Es handelt sich bei dem ersten Lenkradwinkelsensor 10 beispielsweise um den herkömmlichen Lenkradwinkelsensor eines dem Fachmann bekannten ESP-Systems, mit dem die Lenkvorgaben des Fahrers ermittelt werden, die als Eingangsgröße für ein ESP-Referenzmodell dienen.

Der Winkelgeber 10 ist in einer dem Fachmann bekannten Art als elektro-mechanischer, magnetischer oder optischer Sensor ausgeführt. Beispielsweise handelt es um einen Hall-Lenkradwinkelsensor, bei dem radial bezüglich der Lenkwelle 3 angeordnete Hall-Sensoren das magnetische Feld eines benachbarten Magneten erfassen, das von einer aus weichmagnetischem Material gefertigten Codescheibe moduliert wird, die konzentrisch an der Lenkwelle 3 befestigt ist.

Derartige, heute in herkömmlichen ESP-Systemen eingesetzte Winkelgeber haben üblicherweise eine Genauigkeit von ca. 4,5° und eine Auflösung von ca. 1,5°.

Zur Steigerung der Genauigkeit und der Auflösung bei der Lenkradwinkelmessung ist es im Rahmen der Erfindung vorgesehen, die Lenkanlage 1 zusätzlich zu dem ersten Winkelgeber 10 mit einem zweiten Winkelgeber 11 auszurüsten, bei dem es sich um einen inkremental messenden Winkelgeber handelt.

Der Winkelgeber 11 kann dabei beispielsweise als optischer oder magnetischer Winkelgeber ausgebildet sein, bei dem eine ringförmige Inkrementalspur mit einer regelmäßigen Struktur durch einen Inkrementalsensor abgetastet wird. Er verfügt ferner über einen Referenzmarkensensor, der wenigstens eine Referenzmarke erfasst, die in die Inkrementalspur eingebracht ist oder sich auf einer weiteren ringförmigen Spur befindet.

Die Referenzmarke ist dabei so auf der ringförmigen Spur angeordnet, dass sie von dem Sensorelement erfasst wird, wenn die Lenkwelle 3 bzw. das Lenkrad 9 eine vorgegebene Stellung einnimmt, bei der es sich vorzugsweise um die Geradeausstellung handelt, die insbesondere einem Lenkradwinkel von 0° entspricht. Es können hier jedoch selbstverständlich auch andere Lenkradstellungen als die Geradeausstellung vorgegeben werden.

Da das Lenkrad 9 bzw. die Lenkwelle 3 um zwei volle Umdrehungen gedreht werden kann, ist die Referenzmarke jedoch nicht eindeutig einem Referenzlenkradwinkel zugeordnet, sondern wird vielmehr bei mehreren Referenzlenkradwinkeln erfasst, die sich jeweils um 360° unterscheiden.

Wird die Referenzmarke in der Geradeausstellung des Lenkrades 9 bei einem Referenzlenkradwinkel von 0° erfasst, treten somit weitere Referenzlenkradwinkel von -360° und +360° sowie -720° und +720° auf, die ebenfalls der Geradeausstellung des Lenkrades 9 zugeordnet werden können.

Neben der Geradeausstellung auch weitere Lenkradstellungen vorgegeben werden, denen jeweils eine Referenzmarke und mehrere Referenzlenkradwinkel zugeordnet werden.

Ein erstes Ausgangssignal des Winkelgebers 11, das im Folgenden als Inkrementalsignal bezeichnet wird, wird von dem Inkrementalsensor geliefert und besteht aus einer Abfolge von Impulsen, wobei die Lenkwelle 3 bzw. das Lenkrad 9 zwischen dem Auftreten zweier Impulse um einen vorgegebenen Winkelbetrag gedreht wurde. Die Drehrichtung ist dem Inkrementalsignal ebenfalls entnehmbar.

Ein zweites Ausgangssignal des Winkelgebers wird von dem Referenzmarkensensor geliefert, wenn dieser von einer Referenzmarke passiert wird.

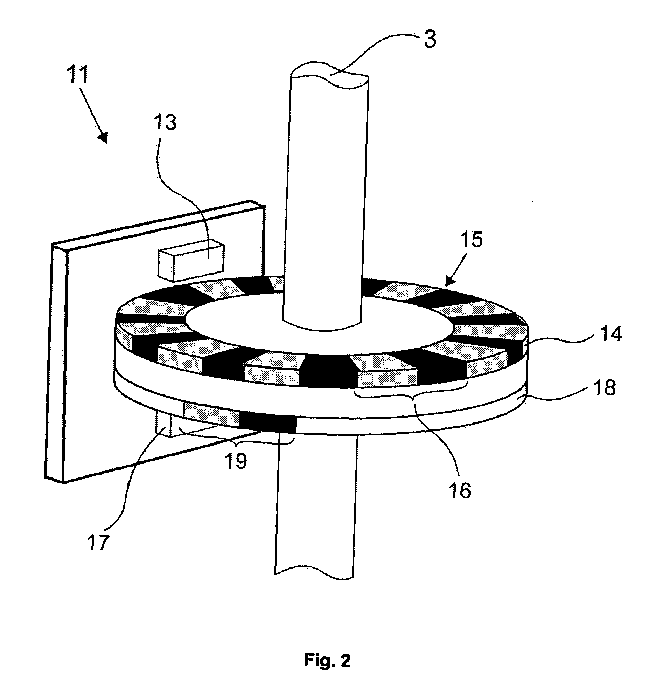

Eine Ausgestaltung des inkremental messenden Winkelgebers 11 ist beispielhaft in der Figur 2 dargestellt. Der Winkelgeber 11 enthält in dieser Ausführungsform einen magnetoresistiven Inkrementalsensor (MR-Sensor) 13, der die Inkrementalspur 14 eines in konzentrischer Anordnung an der Lenkwelle 3 befestigten Polrads 15 abtastet, das unmittelbar benachbarte Polpaare gleicher Pollänge aufweist, die jeweils aus einem magnetischen Nordpol (schwarz gefärbt) und einem magnetischen Südpol (grau gefärbt) bestehen. Ein beispielhaft herausgegriffenes Polpaar ist dabei in der Figur 2 mit der Bezugsziffer 16 bezeichnet.

Der Referenzmarkensensor 17 ist in einer vorteilhaften Ausführungsform der Erfindung als ein MR-Sensor ausgeführt, der eine zweite Spur 18 des Polrades 15 abtastet, die ein einzelnes, in einem vorgegeben Winkelsegment des Polrades 15 angeordnetes Polpaar 19 aufweist, welches die Referenzmarken bildet. Entsprechend sind bei Verwendung mehrerer Referenzmarken mehrere Polpaare 19 in vorgegebenen Winkelabständen bzw. innerhalb vorgegebener, zueinander beabstandeter Winkelsegmente des Polrads 15 auf der zweiten Spur 18 des Polrads 15 angeordnet.

Die MR-Sensoren sind in einer dem Fachmann bekannten Weise ausgebildet und verfügen vorzugsweise über zwei um 45° gegeneinander gedrehte Sensorbrücken, die beim Passieren eines Polpaares 16, 19 jeweils ein sinus- bzw. kosinusförmiges Ausgangssignal liefern, wobei die Signale zur Auswertung vorzugsweise interpoliert werden.

Durch eine Auswertung der Phasenlagen bzw. der Lage der Signalflanken zueinander kann mit einem derartigen Sensor die Winkelstellung innerhalb des von einem Polpaar 16,19 überdeckten Winkelbereichs eindeutig bestimmt werden und der Drehsinn, mit dem das Polrad 15 gedreht wird, ermittelt werden.

Derart ausgestaltete Inkrementalwinkelgeber können heutzutage bereits mit einer hohen Genauigkeit von ca. 1° und einer hohen Auflösung von ca. 0,1° kostengünstig in großen Stückzahlen erworben werden.

Mit beiden Winkelgebern 10, 11 ist eine Auswerteeinheit 12 signalmäßig verbunden, die ausgehend von einem Ausgangswert die Winkelstellung des Lenkrades 9 bzw. der Lenkwelle 3 aus dem Inkrementalsignal des Winkelgebers 11 ermittelt, indem sie den Wert des Lenkradwinkels nach Maßgabe des Inkrementalsignals entsprechend des Drehsinns, in dem das Lenkrad 9 gedreht wird, in jedem Messschritt inkrementiert oder dekrementiert.

Bei einem Zündungsneustart fragt die Auswerteeinheit 12 dabei den Wert des Lenkradwinkels von dem absolut messenden Winkelgeber 10 ab, und speichert den erhaltenen Wert zunächst als Ausgangswert. Ausgehend von diesem Ausgangswert wird dann der Lenkradwinkel mittels des Inkrementalsignals des Winkelgebers 11 bestimmt, bis ein Referenzimpuls erfasst wird.

Bei der Erfassung eines Referenzimpulses wird eine Anpassung des aktuell vorliegenden Lenkradwinkels vorgenommen, indem die Auswerteeinheit 12 zunächst denjenigen Referenzlenkradwinkel ermittelt, der dem aktuellen Wert des Lenkradwinkels am nächsten liegt, und dann den Wert dieses Referenzlenkradwinkels als neuen Wert des Lenkradwinkels übernimmt.

Sind beispielsweise die Referenzlenkradwinkel 0°, ±360° und ±720° vorgegeben und empfängt die Auswerteeinheit 12 beispielsweise bei Vorliegen eines Lenkradwinkels von 358,7° einen Referenzimpuls, so wird der Lenkradwinkel beim Empfang des Referenzpulses auf einen Wert von 360° gesetzt, welches der Referenzwert ist, der dem aktuellen Wert von 358,7° am nächsten liegt. Entsprechend wird der Lenkradwinkel beispielsweise auf den Wert 0° gesetzt, wenn der Referenzimpuls bei Vorliegen eines Lenkradwinkels von 0,9° empfangen wird.

Nach der Übernahme eines Referenzwertes als aktueller Wert des Lenkradwinkels wird der Lenkradwinkel wiederum nach der Maßgabe des Inkrementalsignals des Winkelgebers 11 durch ein Inkrementieren oder ein Dekrementieren des aktuellen Wertes ermittelt.

Es erfolgt somit eine Korrektur des Wertes des Lenkradwinkels, wenn die Referenzmarke erstmals den Referenzmarkensensor erreicht, so dass die Genauigkeit bei der nachfolgenden Bestimmung des Lenkwinkels der Genauigkeit des inkremental messenden Winkelgebers 11 entspricht.

Durch empirische Untersuchung ist dabei herausgefunden worden, dass der Fahrer das Lenkrad 9 in der Regel bereits sehr kurzzeitig nach einem Zündungsstart bzw. nach dem Anfahren in die Geradeausstellung bringt, so es in der Regel bereits nach einer kurzen Zeit eine Korrektur des zunächst ungenauen Wertes des Lenkradwinkels möglich ist.

In Ausführungsformen kann es zudem vorgesehen sein, dass die Auswerteinheit 12 bei jedem Empfang eines Referenzimpulses eine Korrektur des Wertes für den Lenkwinkel vornimmt, die in der zuvor beschriebenen Weise vorgenommen wird. Durch diese wiederholte Kalibrierung wird verhindert, dass die Genauigkeit des ermittelten Wertes für den Lenkradwinkel mit zunehmender Messdauer ungenauer wird.

Darüber kann es vorgesehen sein, dass die Auswerteeinheit 12 bei jedem Empfang eines Referenzimpulses überprüft, ob der aktuell vorliegende Wert des Lenkradwinkels innerhalb eines vorgegebenen Toleranzbereichs mit dem Wert eines Referenzlenkradwinkels übereinstimmt und eine Fehlermeldung ausgibt, wenn dies nicht der Fall ist.

Sind die Differenzen zwischen dem Lenkradwinkel und allen bestehenden Referenzlenkradwinkeln größer als ein vorgegebener Schwellenwert, ist davon auszugehen, dass innerhalb der Sensorik ein Fehler vorliegt, und es wird ein Fehlersignal ausgegeben.

Ferner können in regelmäßigen Abständen die mittels des ersten Winkelgebers 10 und des zweiten Winkelgebers 11 ermittelten Werte des Lenkradwinkels miteinander verglichen werden, um eine Plausibilitätskontrolle durchzuführen. Wird dabei eine Abweichung ermittelt, die größer als ein vorgegebener Schwellenwert ist, so wird eine Fehlermeldung ausgegeben, die auf einen Fehler in einem der Winkelgeber 10, 11 hindeutet. Dabei wird der Schwellenwert insbesondere größer gewählt als die Abweichungen, die aufgrund der Messungenauigkeiten der Winkelgeber 10,11 zwischen den beiden Lenkradwinkelwerten zu erwarten sind.

Der mittels des Winkelgebers 11 gemessene hochgenaue Wert des Lenkradwinkels kann insbesondere als Eingangsgröße für ein System dienen, das automatische Eingriffe in das Lenkungssystem vornimmt. In der Figur 1 sind dabei schematisch ein Steuergerät 20 sowie ein in den Lenkstrang eingreifender Aktuator 21 dargestellt.

Dabei kann es sich beispielsweise um ein System handeln, bei dem der Aktuator 21 als ein Überlagerungsgetriebe ausgebildet ist, mit dem ein Lenkwinkel zusätzlich zu dem von dem Fahrer eingestellten Lenkwinkel an den lenkbaren Rädern 7,8 eines Fahrzeugs einstellt.

Mittels des Zusatzlenkwinkels kann das Fahrzeug dabei in kritischen Fahrsituationen stabilisiert werden. In unkritischen Fahrsituationen kann mittels des Zusatzlenkwinkels die Agilität des Fahrzeugs erhöht werden.

Ferner kann es sich um ein System handeln, bei dem die Lenkwelle 3 bzw. das Lenkrad 9 mit einem zusätzlichen Lenkmoment beaufschlagt wird, um dem Fahrer beispielsweise bei einem Über- oder Untersteuern des Fahrzeugs eine "Lenkempfehlung" zu geben und ihn so bei der Stabilisierung des Fahrzeugs zu unterstützen. Der Aktuator 21 ist in einem solchen System beispielsweise als eine elektronische Servolenkung ausgeführt.

## Patentansprüche

1. Vorrichtung zum Ermitteln eines Lenkradwinkels, umfassend einen, in einem wenigstens einer vollständigen Umdrehung des Lenkrades (9) entsprechenden Winkelbereich absolut messenden Winkelgeber (10) mit einer ersten Genauigkeit, einen inkremental messenden Winkelgeber (11), der ein erstes Ausgangssignal liefert, aus dem eine Veränderung der Winkelstellung des Lenkrades (9) mit einer zweiten Genauigkeit ermittelbar ist, die größer als die erste Genauigkeit ist, und der ein zweites Ausgangssignal liefert, wenn das Lenkrad (9) wenigstens eine vorgegebene Stellung einnimmt, die wenigstens zwei Referenzlenkradwinkeln zuordenbar ist sowie eine mit den Winkelgebern (10, 11) verbundene Auswerteeinheit (12), wobei die Auswerteeinheit (12) den Lenkradwinkel ausgehend von einem mittels des absolut messenden Winkelgebers (10) bestimmten Ausgangswert nach Maßgabe des ersten Ausgangssignals des inkremental messenden Lenkradwinkelsgebers (11) ermittelt, und die Auswerteeinheit (12) den Wert des Lenkradwinkels beim Auftreten des zweiten Ausgangssignals an einen der Referenzlenkradwinkel anpasst.
**dadurch gekennzeichnet,**
**dass** der inkremental messende Lenkradwinkelgeber (11) einen magnetoresistiven Sensor (13) aufweist, der eine Inkrementalspur (14) eines an einer mit dem Lenkrad (9) verbundenen Lenkwelle (3) befestigten Polrades (15) abtastet, um das erste Ausgangssignal zu erzeugen
und **dass** die Auswerteinheit (12) beim Auftreten des zweiten Ausgangssignals des inkremental messenden Lenkradwinkelgeber (11) einen Wert des Lenkradwinkels festlegt, welcher dem Wert desjenigen Referenzlenkradwinkels entspricht, der dem vorliegenden Wert des Lenkradwinkels am nächsten liegt
und **dass** der angepasste Wert des Lenkradwinkels als neuer Ausgangswert dient, wobei der Lenkradwinkel nach der Anpassung ausgehend von dem neuen Ausgangswert nach Maßgabe des ersten Ausgangssignals des inkremental messende Lenkradwinkelgeber (11) ermittelt wird
und inkremental messende Lenkradwinkelgeber (11) einen weiteren magnetoresistiven Sensor (17) aufweist, der eine weitere Spur (18) des Polrades (9) mit wenigstens einem, in einem vorgegebenen Winkelsegment des Polrades (15) angeordneten Polpaar (19) abtastet, um das zweite Ausgangssignal zu erzeugen
und die weitere Spur (18) des Polrades (15) in mehreren, zueinander beabstandeten Winkelsegmenten jeweils ein Polpaar (19) aufweist.

2. Vorrichtung nach Anspruch 1,
**dadurch gekennzeichnet,**
**dass** der Ausgangswert mittels des absolut messenden Winkelgebers (10) bei einem Zündungsneustart bestimmt wird.

3. Vorrichtung nach einem der vorangegangenen Ansprüche,
**dadurch gekennzeichnet,**
**dass** der Wert des Lenkradwinkels bei einem erstmaligen Empfang des zweiten Ausgangssignals nach einem Zündungsneustart angepasst wird.

4. Vorrichtung nach einem der vorangegangenen Ansprüche,
**dadurch gekennzeichnet,**
**dass** die Ermittlung des Ausgangswertes mittels des absolut messenden Winkelgebers (10) und die Anpassung des Wertes des Lenkradwinkels anhand des zweiten Ausgangssignals des inkremental messenden Winkelgebers (11) im Wesentlichen gleichzeitig erfolgen.

5. Vorrichtung nach einem der vorangegangenen Ansprüche,
**dadurch gekennzeichnet,**
**dass** es sich bei der vorgegebenen Stellung des Lenkrads (9) um die Geradeausstellung handelt.

6. Vorrichtung nach einem der vorangegangenen Ansprüche,
**dadurch gekennzeichnet,**
**dass** mehrere Stellungen des Lenkrads (9) vorgegeben werden, bei deren Vorliegen der inkremental messende Winkelgeber (11) ein zweites Ausgangssignal liefert.

7. Vorrichtung nach einem der vorangegangenen Ansprüche,
**dadurch gekennzeichnet,**
**dass** der absolut messende Winkelgeber Bestandteil eines ESP-Systems ist.

8. Vorrichtung nach einem der vorangegangenen Ansprüche,
**dadurch gekennzeichnet,**
**dass** der ermittelte Lenkradwinkel als Eingangsgröße für ein System (20, 21) dient, welches einen Zusatzlenkwinkel an den lenkbaren Rädern (7, 8) eines Fahrzeugs einstellt.

9. Vorrichtung nach einem der vorangegangenen Ansprüche,
**dadurch gekennzeichnet,**
**dass** der ermittelte Lenkradwinkel als Eingangsgröße für ein System (20, 21) dient, welches dem Lenkrad (9) ein Lenkmoment aufprägt.

## Claims

1. Device for determining a steering wheel angle, comprising an angle sensor (10) with a first accuracy, which makes absolute measurements in an angular range corresponding to at least one complete rotation of the steering wheel (9), an incrementally measuring angle sensor (11) which supplies a first output signal from which it is possible to determine a variation in the angular position of the steering wheel (9) with a second accuracy, which is greater than the first accuracy, and which supplies a second output signal when the steering wheel (9) adopts at least one prescribed position which can be assigned to at least two reference steering wheel angles, and an evaluation unit (12) connected to the angle sensors (10, 11), the evaluation unit (12) determining the steering wheel angle starting from an output value, determined by means of the absolutely measuring angle sensor (10), in accordance with the first output signal of the incrementally measuring steering wheel angle sensor (11), and the evaluation unit (12) adapting the value of the steering wheel angle to one of the reference steering wheel angles upon the occurrence of the second output signal, **characterized in that** the incrementally measuring steering wheel angle sensor (11) has a magnetoresistive sensor (13) which scans an incremental track (14) of a magnet wheel (15) fastened on a steering shaft (3) connected to the steering wheel (9), in order to generate the first output signal, and **in that** upon the occurrence of the second output signal of the incrementally measuring steering wheel angle sensor (11) the evaluation unit (12) fixes a value of the steering wheel angle which corresponds to the value of that reference steering wheel angle which lies closest to the present value of the steering wheel angle, and **in that** the matched value of the steering wheel angle serves as new output value, the steering wheel angle being determined after matching starting from the new output value in accordance with the first output signal of the incrementally measuring steering wheel angle sensor (11) and the incrementally measuring steering wheel angle sensor (11) having a further magnetoresistive sensor (17) which scans a further track (18) of the magnet wheel (9) with at least one pole pair (19) arranged in a prescribed angular segment of the magnet wheel (15), in order to generate the second output signal, and the further track (18) of the magnet wheel (15) respectively having a pole pair (19) in a plurality of angular segments spaced apart from one another.

2. Device according to Claim 1, **characterized in that** the output value is determined by means of the absolutely measuring angle sensor (10) when restarting the ignition.

3. Device according to one of the preceding claims, **characterized in that** from first time reception of the second output signal the value of the steering wheel angle is matched after restarting the ignition.

4. Device according to one of the preceding claims, **characterized in that** the determination of the output value by means of the absolutely measuring angle sensor (10) and the matching of the value of the steering wheel angle with the aid of the second output signal of the incrementally measuring angle sensor (11) are performed substantially at the same time.

5. Device according to one of the preceding claims, **characterized in that** the prescribed position of the steering wheel (9) is the straight-ahead position.

6. Device according to one of the preceding claims, **characterized in that** a plurality of positions of the steering wheel (9) are prescribed upon the presence of which the incrementally measuring angle sensor (11) supplies a second output signal.

7. Device according to one of the preceding claims, **characterized in that** the absolutely measuring angle sensor is a component of an ESP system.

8. Device according to one of the preceding claims, **characterized in that** the determined steering wheel angle serves as input variable for a system (20, 21) which sets an additional steering angle at the steerable wheels (7, 8) of a vehicle.

9. Device according to one of the preceding claims, **characterized in that** the determined steering wheel angle serves as input variable for a system (20, 21) which applies a steering torque to the steering wheel (9).

## Revendications

1. Dispositif de détermination de l'angle de volant, qui comprend
un détecteur d'angle (10) mesurant en absolu dans une plage angulaire qui correspond au moins à un tour complet du volant (9) et qui présente une première précision,
un détecteur d'angle (11) mesurant par incréments, qui délivre un premier signal de sortie à partir duquel une modification de la position angulaire du volant (9) peut être déterminée avec une deuxième précision supérieure à la première précision et qui délivre un deuxième signal de sortie si le volant (9) prend au moins une position prédéterminée qui peut être associée à au moins deux angles de référence de volant,
ainsi qu'une unité d'évaluation (12) reliée aux détecteurs d'angle (10, 11), l'unité d'évaluation (12) déterminant l'angle de volant à partir d'une valeur initiale définie au moyen du détecteur d'angle (10) mesurant de manière absolue, en se basant sur le premier signal de sortie du détecteur d'angle de volant (11) mesurant par incréments, l'unité d'évaluation (12) adaptant la valeur de l'angle de volant à un angle de référence de volant lorsque le deuxième signal de sortie survient,
**caractérisé en ce que**
le détecteur (11) d'angle de volant mesurant par incréments présente un détecteur magnéto-résistif (13) qui palpe une piste incrémentielle (14) d'une roue polaire (15) fixée à la colonne de direction (3) reliée au volant (9) pour former le premier signal de sortie,
**en ce que** lorsque survient le deuxième signal de sortie du détecteur (11) d'angle de volant mesurant par incréments, l'unité d'évaluation (12) définit une valeur de l'angle de volant qui correspond à la valeur d'angle de référence de volant située le plus près de la valeur en cours de l'angle de volant,
**en ce que** la valeur adaptée de l'angle de volant sert de nouvelle valeur de sortie, l'angle de volant après adaptation étant déterminé à partir de la nouvelle valeur de sortie en fonction du premier signal de sortie du détecteur (11) de volant mesurant par incréments,
**en ce que** pour former le deuxième signal de sortie, le détecteur (11) d'angle de volant mesurant par incréments présente un autre détecteur magnéto-résistif (17) qui palpe une autre piste (18) de la roue polaire (9) à l'aide d'au moins une paire de pôles (19) disposée sur un segment angulaire prédéterminé de la roue polaire (15), et
**en ce que** l'autre piste (18) de la roue polaire (15) présente une paire de pôles (19) dans chacun parmi plusieurs segments angulaires situés à distance l'un de l'autre.

2. Dispositif selon la revendication 1, **caractérisé en ce que** lors d'un nouveau lancement de l'allumage, la valeur de sortie est déterminée au moyen du détecteur (10) d'angle mesurant de manière absolue.

3. Dispositif selon l'une des revendications précédentes, **caractérisé en ce qu'**après la première réception du deuxième signal de sortie, la valeur de l'angle de volant est adaptée après un nouveau lancement de l'allumage.

4. Dispositif selon l'une des revendications précédentes, **caractérisé en ce que** la détermination de la valeur de sortie s'effectue au moyen du détecteur (10) d'angle mesurant de manière absolue et l'adaptation de la valeur de l'angle de volant s'effectue essentiellement en même temps à l'aide du deuxième signal de sortie du détecteur (11) d'angle mesurant par incréments.

5. Dispositif selon l'une des revendications précédentes, **caractérisé en ce que** la position prédéterminée du volant (9) est la position de roulage en ligne droite.

6. Dispositif selon l'une des revendications précédentes, **caractérisé en ce que** plusieurs positions du volant (9) sont prédéterminées et **en ce que** lorsqu'elles sont prises, le détecteur (11) d'angle mesurant par incréments délivre un deuxième signal de sortie.

7. Dispositif selon l'une des revendications précédentes, **caractérisé en ce que** le détecteur d'angle mesurant de manière absolue fait partie d'un système ESP.

8. Dispositif selon l'une des revendications précédentes, **caractérisé en ce que** l'angle de volant déterminé sert de grandeur d'entrée à un système (20, 21) qui établit un angle supplémentaire de direction sur les roues directrices (7, 8) d'un véhicule.

9. Dispositif selon l'une des revendications précédentes, **caractérisé en ce que** l'angle de volant déterminé sert de grandeur d'entrée à un système (20, 21) qui exerce un couple de direction sur le volant (9).
